# FASCICULE DE BREVET EUROPEEN

(11) **EP 2 566 352 B1**
(45) Date de publication et mention de la délivrance du brevet: **20.08.2014**
(21) Numéro de dépôt: 11716571.2
(22) Date de dépôt: 29.04.2011
(51) Int. Cl.: A23L 2/04, A23L 1/025, A23N 1/00, A23N 1/02

(54) **PROCEDE ET INSTALLATION DE TRAITEMENT DE TISSUS VEGETAUX POUR EN EXTRAIRE UNE SUBSTANCE VEGETALE, NOTAMMENT UN JUS**
VERFAHREN UND PFLANZENGEWEBE BEHANDLUNGSANLAGE ZUM EXTRAHIREN EINER PFLANZLICHEN AUSGANGSSUBSTANZ, INSBESONDERE EINES SAFTS
PROCESS AND PLANT TISSUES PROCESSING DEVICE TO EXTRACT A VEGETABLE SUBSTANCE, ESPECIALLY A JUICE

(30) Priorité: 03.05.2010 FR 1053413
(43) Date de publication de la demande: 13.03.2013
(73) Titulaire: Maguin SAS, 02800 Charmes (FR); Hazemeyer S.A.S., 02430 Gauchy (FR)
(72) Inventeur: VIDAL, Olivier Pierre, F-77300 Fontainebleau (FR); VOROBIEV, Eugène, F-60200 Compiegne (FR)
(74) Mandataire: Delprat, Olivier
(86) Numéro de dépôt international: PCT/EP2011/056863
(87) Numéro de publication internationale: WO 2011/138248

(56) Documents cités:
- WO-A1-01/62482
- WO-A1-2008/034228
- BOUZRARA ET AL.: "Solid-liquid expression of cellular materials enhanced by pulsed electric field", CHEMICAL ENGINEERING AND PROCESSING, vol. 42, no. 4, 2003, pages 249-257, XP002615522, ISSN: 0255-2701
- VOROBIEV E ET AL: "Stages of constant pressure", WORLD FILTRATION CONGRESS. PROCEEDINGS, XX, XX, 1 avril 2004 (2004-04-01), pages 968-976, XP008084132,

## Description

L'invention concerne le traitement de végétaux récoltés et, en particulier, le traitement de végétaux récoltés en vue d'en extraire une substance végétale, notamment un jus.

Plus particulièrement, l'invention se rapporte à un traitement de tissus végétaux par champ électrique pulsé.

Une application particulièrement intéressante de l'invention concerne le traitement de betteraves à sucres pour l'industrie sucrière.

Il a déjà été proposé,dans l'état de la technique, de traiter des cossettes de betteraves ou d'autres matières végétales, telles que chicorée, pommes de terre, carottes, fruits par champ électriques pulsés en vue d'en extraire des substances.

En effet, en soumettant un tissu végétal à des impulsions d'un champ électrique, les membranes cellulaires du tissu sont rendues perméables voire détruites, de sorte que le jus cellulaire peut être récupéré. Une telle technique est généralement connue sous le terme de « électroporation ».

Le document Chemical Engineering and Processing, 2003, vol 42, pages 249-257 (Bouzrara et al.) décrit une étape de compression destinée à extraire un jus puis l'application d'un champ électrique pulsé afin d'extraire davantage de jus. Une étape de mise sous pression est appliquée simultanément au champ électrique pulsé afin de faciliter la rupture des membranes.

On pourra également à cet égard se référer au document WO 2009/129991 qui décrit un tel procédé d'électroporation de cossettes de betteraves par champ électrique pulsé.

Dans le procédé décrit dans ce document, les betteraves sont tout d'abord broyées en cossettes, et une phase liquide est ajoutée aux cossettes. Le mélange obtenu est ensuite amené sans pression dans une chambre de réaction dans laquelle un champ électrique pulsé est entretenu.

Ce procédé nécessite l'utilisation d'un liquide conducteur mélangé aux cossettes afin, d'une part, de faciliter leur convoyage jusqu'à la chambre de traitement et, d'autre part, de pallier les inconvénients liés à l'inhomogénéité relative du mélange de cossettes dans la chambre de traitement créant des vides non conducteurs entre les cossettes.

La présence de cette phase liquide nécessite l'usage d'un générateur de champs électriques pulsés de forte capacité, de l'ordre de 60 kV et, par conséquent, une chambre de traitement de relativement grandes dimensions.

Le but de l'invention est donc de pallier cet inconvénient et de proposer un procédé de traitement de tissus végétaux permettant d'extraire un jus des tissus sans nécessiter l'emploi d'une phase liquide.

L'invention a donc objet, selon un premier aspect, un procédé de traitement de tissus végétaux par champ électrique pulsé pour en extraire une substance végétale, notamment un jus, dans lequel on compacte les tissus végétaux afin de réduire l'espace résiduel entre les tissus et l'on soumet les végétaux compactés à un champ électrique pulsé dans au moins une chambre de traitement.

Ainsi, grâce à cette phase préalable de compactage, il est possible de mettre les tissus végétaux sous la forme d'un volume compact permettant de réduire l'espace résiduel entre des morceaux de tissus et, par conséquent, de distribuer de façon homogène le champ électrique pulsé à travers les tissus végétaux.

En outre, cette phase de compactage permet d'acheminer les tissus végétaux vers la ou les chambres de traitement sans nécessiter de mélanger les tissus à une phase liquide. A capacité constante de générateur, on peut alors traiter plus de tissus végétaux. A capacité de traitement de végétaux constante, on peut réduire la capacité du générateur, et/ou la quantité du ou des générateurs et la taille de la ou des chambres de traitement.

Dans un mode de mise en oeuvre, postérieurement au traitement des tissus végétaux par champ électrique pulsé, on extrait un premier jus de la chambre de traitement.

Il a été en effet constaté que la phase préalable de mise sous contrainte du tissu végétal permettait d'obtenir aisément un premier jus de pressage. Il a en outre été constaté que ce premier jus était de pureté accrue.

Selon encore une autre caractéristique de ce procédé de traitement, postérieurement à l'extraction du premier jus, on soumet les tissus végétaux à un traitement additionnel d'extraction de jus. Par exemple, on peut utiliser un traitement d'extraction par diffusion ou par pressage.

De préférence, préalablement à l'étape de compactage des tissus végétaux, on procède à un découpage des végétaux. Une telle étape préalable de découpage permet d'améliorer l'homogénéité du mélange dans la ou les chambres de traitement en réduisant encore l'espace entre les végétaux.

Par exemple, on utilise à cet effet un outil coupe-racines.

Le procédé peut encore comporter une étape préalable de lavage des végétaux. On peut en outre injecter de l'air comprimé dans la chambre de traitement avant le traitement des tissus compactés par champ électrique puisé.

Selon encore une autre caractéristique du procédé d'extraction, l'étape de traitement des végétaux compactés est réalisée au moyen de plusieurs chambres de traitement disposées en séries ou en parallèle.

Ainsi, même lorsque l'on utilise des générateurs de champ électrique pulsé de relativement faible capacité, et des chambres de traitement de relativement faibles dimensions, il est possible de traiter des masses relativement importantes de tissus végétaux.

Il est par ailleurs possible de régler les paramètres du champ électrique pulsé en fonction de la nature des végétaux à traiter.

L'invention a également pour objet, selon un deuxième aspect, une installation de traitement de tissus végétaux par champ électrique pulsé pour en extraire une substance végétale, notamment un jus.

Cette installation comporte un étage de compactage des tissus végétaux et au moins une chambre de traitement comprenant des moyens de génération d'un champ électrique pulsé dans ladite chambre pour le traitement des tissus compactés.

Cette installation comporte en outre, dans un mode de réalisation, des moyens d'extraction d'un premier jus issu de la chambre de traitement.

Cette installation peut encore comporter un étage de traitement additionnel des tissus végétaux, notamment par diffusion ou pressage, disposé en aval de la chambre de traitement.

Selon encore une autre caractéristique de l'installation, celle-ci comporte un étage de découpe de végétaux disposé en amont de l'étage de compactage.

Cet étage de découpe peut comporter un coupe-racines.

Dans un mode de réalisation, les moyens de génération d'un champ électrique pulsé comportent un générateur de champ électrique pulsé délivrant un champ électrique compris entre environ 0,1 et 1 kV/cm.

D'autres buts, caractéristiques et avantages de l'invention apparaîtront à la lecture de la description suivante, donnée uniquement à titre d'exemple non limitatif et faite en référence aux dessins annexés sur lesquels :
- la figure 1 illustre de manière schématique un premier exemple de réalisation d'une installation de traitement de tissus végétaux conforme à l'invention ;
- la figure 2 illustre un deuxième mode de réalisation d'une installation de traitement de tissus conforme à l'invention ; et
- la figure 3 illustre un troisième mode de réalisation d'une installation de traitement de tissus conforme à l'invention.

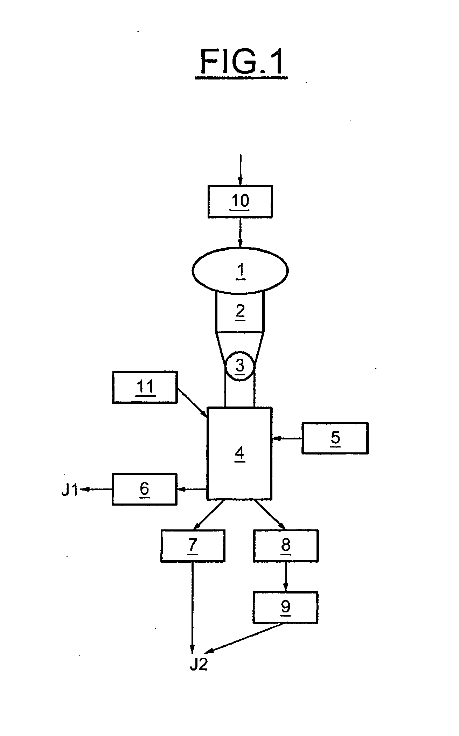

Sur la figure 1, on a représenté un premier exemple de réalisation d'une installation de traitement de tissus végétaux conforme à l'invention.

Cette installation est destinée à traiter par champ électrique pulsé des tissus végétaux issus de récoltes, notamment, mais non exclusivement des betteraves à sucre en vue d'en récupérer un jus cellulaire et, de manière générale, une substance végétale, par exemple de la pulpe.

On notera que l'on ne sort pas du cadre de l'invention lorsque l'installation est destinée au traitement de tous types de végétaux, fruits, plantes ou légumes, en vue d'en extraire un jus ou une substance.

Le traitement utilisé est fondé sur l'application d'un champ électrique pulsé aux végétaux à traiter.

En effet, lorsqu'un tissu végétal est placé dans un champ électrique, la différence de compositions intra et extra cellulaire engendre une accumulation de charges électriques sur les surfaces membranaires et l'augmentation du potentiel transmembranaire.

L'attraction entre les charges de signes opposés accumulées de part et d'autre de la membrane provoque une compression de cette dernière.

La force élastique engendrée par la membrane tend à s'opposer à cette compression. Lorsque le champ électrique appliqué dépasse une valeur critique, la force de compression appliquée de part et d'autre de la membrane sous l'effet de l'attraction des charges de signes opposés devient supérieure à la force élastique résistante de la membrane, et l'on assiste à l'apparition de pores ou à l'élargissement de ces derniers lorsqu'ils existent dans la membrane. A ce stade, l'électroporation est supposée demeurer réversible. Lorsque l'on augmente l'amplitude du champ électrique et/ou la durée de son application, on constate une perméabilisation irréversible et une destruction de la membrane cellulaire permettant alors de récupérer le jus cellulaire.

Ainsi, l'installation illustrée à la figure 1 comprend essentiellement, en considérant la direction de traitement des tissus végétaux : un premier étage 1 de découpage des végétaux ; un étage de 2 de convoyage des végétaux découpés, par exemple un système e convoyage volumétrique ; un troisième étage 3 de compactage des tissus découpés, disposé en aval du deuxième étage de convoyage 2 ; et une chambre de traitement 4 des végétaux découpés et compactés associée à un générateur de champ électrique pulsé 5.

L'étage de découpage 1 correspond au premier étage de l'installation. Il est alimenté en végétaux à traiter, tels que récoltés. Cet étage 1 est adapté pour assurer un découpage des végétaux selon une géométrie spécifique permettant de réduire le taux de vide entre les éléments découpés une fois mis en tas. Par exemple, on utilise à cet égard un coupe-racines utilisé traditionnellement en industrie sucrière de betterave ou de chicorée. Pour d'autres racines, comme le manioc, on pourra utiliser une râpeuse.

L'étage de compactage 3 assure, quant à lui, une mise sous pression des végétaux coupés afin de réduire encore l'espace résiduel entre les végétaux et, en particulier, l'espace entre les végétaux découpés.

Il s'agit, entre d'autres termes, de délivrer à la chambre de traitement 4 une masse homogène de végétaux découpés, minimisant les espaces sans matière végétale de sorte qu'il n'est pas nécessaire d'utiliser une phase liquide ou un gel électriquement conducteur dans la chambre de traitement, et des traitements consécutifs à perte d'une telle phase ou d'un tel gel.

Cette phase de compactage peut être mise en oeuvre par tout outil ou pressoir approprié capable d'exercer une pression suffisante sur les végétaux découpés de manière à les compacter et réduire ainsi les espaces résiduels sans exercer une pression excessive tendant à réaliser une extraction du jus.

Comme indiqué précédemment, en aval de l'étage de compactage, l'installation comporte une chambre de traitement associée à un générateur 5 de champs électriques pulsés.

En fonctionnement, le générateur 5 est destiné à créer et entretenir dans le volume interne de la chambre 4 empli de végétaux coupés et compactés un champ électrique pulsé dont les paramètres peuvent être adaptés en fonction de la nature des végétaux traités.

Il est ainsi possible, par exemple, de faire varier la fréquence, la largeur des impulsions, la tension de sortie et, de manière générale, la forme du signal de tension issu du générateur en fonction de la nature des tissus végétaux à traiter. Ces paramètres peuvent également être modifiés pour s'adapter à la qualité ou aux caractéristiques des produits en fonction des terroirs ou des conditions climatiques, ou en cas de maladies.

Mais on notera que, grâce à l'étape préalable de compactage, il est possible d'acheminer les végétaux vers la chambre de traitement sans mélanger les végétaux à une phase liquide.

Il est également possible, grâce à cette phase de compactage, d'utiliser une chambre de traitement de faibles dimensions ainsi qu'un générateur de champ électriques pulsés 5 de faible capacité dans la mesure où cette étape de compactage rend inutile l'emploi d'une phase liquide ou d'un gel électriquement conducteur, pour remplir les espaces vides qui, sinon, existeraient entre les végétaux et, par conséquent, tous traitements à perte de cette phase liquide ou de ce gel.

Il est ainsi possible d'utiliser un générateur de champ électriques pulsés de puissance comprise entre environ 15 et 20 kV capable de fournir un champ électrique compris entre environ 0,1 et 1 kV/cm dans la chambre de traitement 4.

De même, la chambre de traitement 4 peut avoir, à titre d'exemple non limitatif, une section comprise entre 50 mm et 500 mm., et une longueur comprise entre 200 mm et 2 m environ, selon la section.

De telles caractéristiques permettent de traiter des masses de tissus végétaux comprises entre environ 1 et 150 tonne(s)/heure.

On notera que la phase préalable de compactage combinée au traitement par champs électriques pulsés permet de prévoir, en sortie de la chambre de traitement 4, un étage 6 d'extraction d'un premier jus J1.

En effet, les champs électriques pulsés permettent de traiter des végétaux pendant des pics de tension très courts, de l'ordre de quelques microsecondes, engendrant une très faible dissipation d'énergie électrique par effet Joule dans le tissu végétal. Il est ainsi possible d'obtenir à froid un jus de grande pureté et, en tout état de cause, de qualité accrue par rapport aux techniques d'extraction traditionnelles par pressage ou diffusion.

On notera que, pour des jus de betteraves, il est généralement nécessaire de mettre en oeuvre une phase ultérieure d'épuration calco-carbonique. Dans la mesure où la phase de compactage préalable et le traitement par champ électrique pulsé permettent d'obtenir un jus de pureté accrue, cette phase postérieure d'épuration est grandement facilitée. L'épuration peut être alors de type calco-carbonique allégée, mais également soit partiellement, soit en totalité, une épuration utilisant des membranes de micro-filtration et d'ultra-filtration en fonction la nature des végétaux et la qualité des jus extraits.

En aval de la chambre de traitement 4, l'installation comporte encore des étages additionnels de traitements des tissus végétaux, de type classique, permettant une extraction complémentaire d'un jus J2.

Par exemple, comme illustré, on peut soit utiliser un étage 7 de traitement par pressage ou, en variante, un étage 8 de traitement par diffusion suivi d'un étage 9 de traitement par pressage.

On notera enfin que l'installation peut encore être pourvue d'un étage de lavage 10 des végétaux, par exemple disposé en amont de l'étage de découpage 1.

Ainsi, grâce à la présence de cette cet étage de lavage qui permet de conférer une certaine humidité aux végétaux sous forme d'une pellicule en surface des végétaux, l'installation peut être pourvue d'un étage optionnel 11 d'injection d'air comprimé dans la chambre de traitement avant la première application de champ électriques, pour créer dans cette chambre une atmosphère humide sous forme de brouillard augmentant encore le rendement de traitement en créant une atmosphère électriquement conductrice dans la chambre de traitement 4, tout en permettant également une lubrification des parois de la chambre.

On notera que l'invention qui vient d'être décrite permet, grâce à la mise en oeuvre de la phase de compactage combinée à l'utilisation d'un générateur de champs électriques pulsés de capacité relativement faible et à une chambre de traitement de dimensions réduites, d'obtenir des installations de traitement de dimensions réduites ou d'obtenir une augmentation de la qualité des jus récupérés et du rendement du traitement mis en oeuvre dans les étages de traitements additionnels 7, 8 et 9 suite à une augmentation du taux de pressage, à une réduction du soutirage en diffusion, à une baisse de température, ...

Mais on notera que l'invention n'est pas limitée au mode de réalisation décrit.

En effet, dans le mode de réalisation décrit précédemment, l'installation comporte une unique chambre de traitement 4 associée à un générateur de champs électriques pulsés 5.

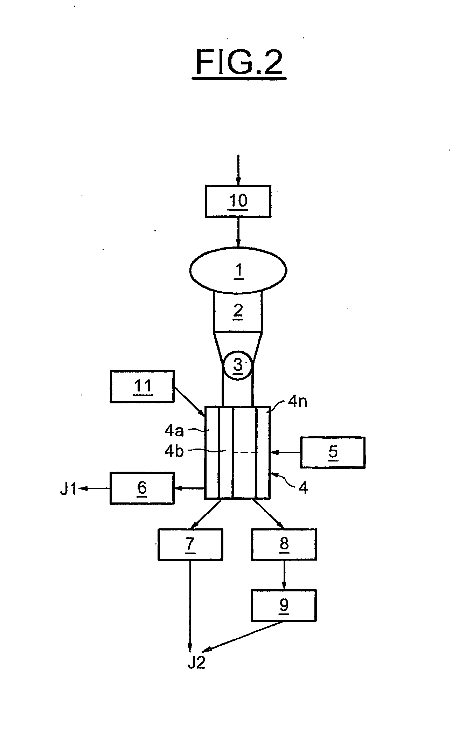

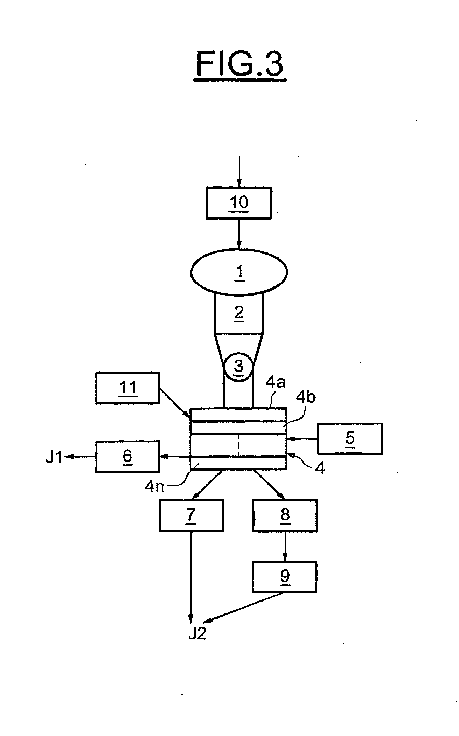

Dans le but d'augmenter la capacité de traitement, il est possible d'utiliser plusieurs chambres de traitement agencées en parallèle (figure 2) ou, en variante, en série (figure 3).

On notera qu'il est possible de prévoir autant de chambres de traitement que nécessaire en parallèle ou en série, alimentées par un ou plusieurs générateurs en parallèles, pour garantir une électroporation suffisante compatible avec les procédés de traitement industriels.

## Revendications

1. Procédé de traitement de tissus végétaux par champ électrique pulsé pour en extraire une substance végétale, notamment un jus, **caractérisé en ce que** :
- on compacte les tissus végétaux afin de réduire l'espace résiduel entre les végétaux sans exercer une pression excessive tendant à réaliser une extraction du jus, et
- on soumet les végétaux compactés à un champ électrique pulsé dans au moins une chambre de traitement (4), et **en ce que** postérieurement au traitement des tissus végétaux par champ électrique pulsé, on extrait un premier jus de la chambre de traitement (4).

2. Procédé selon la revendication 1, **caractérisé en ce que** postérieurement à l'extraction du premier jus, on soumet les tissus végétaux à un traitement additionnel d'extraction de jus, notamment par diffusion ou pressage.

3. Procédé selon l'une quelconque des revendications 1 à 2, **caractérisé en ce que** préalablement à l'étape de compactage des tissus végétaux, on procède à un découpage des végétaux.

4. Procédé selon la revendication 3, **caractérisé en ce que** le découpage est réalisé au moyen d'un outil coupe-racines.

5. Procédé selon l'une quelconque des revendications 1 à 4, **caractérisé en ce qu'**il comporte une étape préalable de lavage des végétaux et **en ce que** l'on injecte de l'air comprimé dans la chambre de traitement avant le traitement des tissus compactés par champ électriques pulsés.

6. Procédé selon l'une quelconque des revendications 1 à 5, **caractérisé en ce que** l'étape de traitement des végétaux compactés est réalisée au moyen de plusieurs chambres de traitement disposées en série ou en parallèle.

7. Procédé selon l'une quelconque des revendications 1 à 6, **caractérisé en ce que** l'on règle les paramètres du champ électrique pulsé en fonction de la nature des végétaux à traiter.

8. Installation de traitement de tissus végétaux par champ électrique pulsé pour en extraire une substance végétale, notamment un jus, **caractérisée en ce qu'**elle comporte un étage (3) de compactage des tissus végétaux et au moins une chambre de traitement (4) comprenant des moyens de génération (5) d'un champ électrique pulsé dans ladite chambre pour le traitement des tissus compactés.

9. Installation selon la revendication 8, **caractérisée en ce qu'**elle comporte des moyens (6) d'extraction d'un premier jus issu de la chambre de traitement (4).

10. Installation selon l'une des revendications 8 et 9, **caractérisée en ce qu'**elle comporte au moins un étage de traitement additionnel (7, 8, 9) des tissus végétaux, notamment par diffusion ou par pressage, disposé en sortie de la chambre de traitement (4).

11. Installation selon l'une quelconque des revendications 8 à 10, **caractérisée en ce qu'**elle comporte un étage de découpage (1) de végétaux disposé en amont de l'étage (3) de compactage.

12. Installation selon la revendication 11, **caractérisée en ce que** l'étage de découpage (1) comporte un coupe-racines.

13. Installation selon l'une quelconque des revendications 8 à 12, **caractérisée en ce que** les moyens de génération d'un champ électrique pulsé comportent un générateur de champ électriques pulsés délivrant un champ électrique compris entre environ 0,1 et 1 kV/cm.

## Patentansprüche

1. Verfahren zur Behandlung von Pflanzengeweben mit einem gepulsten elektrischen Feld, um daraus einen pflanzlichen Stoff, insbesondere einen Saft, zu extrahieren, **dadurch gekennzeichnet, dass**:
- die Pflanzengewebe kompaktiert werden, um den verbleibenden Raum zwischen den Pflanzen zu verringern, ohne einen übermäßigen Druck auszuüben, der dahin tendiert, eine Extraktion des Safts durchzuführen, und
- die kompaktierten Pflanzen in mindestens einer Behandlungskammer (4) einem gepulsten elektrischen Feld ausgesetzt werden, und dass nach der Behandlung der Pflanzengewebe durch ein gepulstes elektrisches Feld ein erster Saft aus der Behandlungskammer (4) entnommen wird.

2. Verfahren nach Anspruch 1, **dadurch gekennzeichnet, dass** nach der Extraktion des ersten Safts die Pflanzengewebe einer zusätzlichen Behandlung der Saftextraktion unterzogen werden, insbesondere durch Diffusion oder Pressen.

3. Verfahren nach einem der Ansprüche 1 bis 2, **dadurch gekennzeichnet, dass** vor dem Schritt des Kompaktierens der Pflanzengewebe ein Zerschneiden der Pflanzen durchgeführt wird.

4. Verfahren nach Anspruch 3, **dadurch gekennzeichnet, dass** das Zerschneiden mittels eines Wurzelschneidewerkzeugs durchgeführt wird.

5. Verfahren nach einem der Ansprüche 1 bis 4, **dadurch gekennzeichnet, dass** es einen vorhergehenden Schritt des Waschens der Pflanzen aufweist, und dass vor der Behandlung der kompaktierten Gewebe durch gepulste elektrische Felder Druckluft in die Behandlungskammer injiziert wird.

6. Verfahren nach einem der Ansprüche 1 bis 5, **dadurch gekennzeichnet, dass** der Schritt der Behandlung der kompaktierten Pflanzen mittels mehrerer Behandlungskammern durchgeführt wird, die in Reihe oder parallel angeordnet sind.

7. Verfahren nach einem der Ansprüche 1 bis 6, **dadurch gekennzeichnet, dass** die Parameter des gepulsten elektrischen Felds abhängig von der Beschaffenheit der zu behandelnden Pflanzen geregelt werden.

8. Anlage zur Behandlung von Pflanzengewebe durch ein gepulstes elektrisches Feld, um daraus einen pflanzlichen Stoff, insbesondere einen Saft, zu extrahieren, **dadurch gekennzeichnet, dass** sie eine Kompaktierungsstufe (3) der Pflanzengewebe und mindestens eine Behandlungskammer (4) aufweist, die Einrichtungen zur Erzeugung (5) eines gepulsten elektrischen Felds in der Kammer zur Behandlung der kompaktieren Gewebe enthält.

9. Anlage nach Anspruch 8, **dadurch gekennzeichnet, dass** sie Einrichtungen (6) zur Extraktion eines aus der Behandlungskammer (4) stammenden ersten Safts aufweist.

10. Anlage nach einem der Ansprüche 8 und 9, **dadurch gekennzeichnet, dass** sie mindestens eine zusätzliche Behandlungsstufe (7, 8, 9) der Pflanzengewebe, insbesondere durch Diffusion oder durch Pressen, aufweist, die am Ausgang der Behandlungskammer (4) angeordnet ist.

11. Anlage nach einem der Ansprüche 8 bis 10, **dadurch gekennzeichnet, dass** sie eine Zerschneidungsstufe (1) von Pflanzen aufweist, die vor der Kompaktierungsstufe (3) angeordnet ist.

12. Anlage nach Anspruch 11, **dadurch gekennzeichnet, dass** die Zerschneidungsstufe (1) einen Wurzelschneider aufweist.

13. Anlage nach einem der Ansprüche 8 bis 12, **dadurch gekennzeichnet, dass** die Einrichtungen zur Erzeugung eines gepulsten elektrischen Felds einen Generator gepulster elektrischer Felder aufweisen, der ein elektrisches Feld zwischen etwa 0,1 und 1 kV/cm liefert.

## Claims

1. Method for treating vegetable tissues with a pulsed electric field in order to extract therefrom a vegetable substance, in particular a juice, **characterized in that**:
- the vegetable tissues are compacted in order to reduce the residual space between the vegetables, without exerting an excessive pressure tending to result in juice extraction, and
- the compacted vegetables are subjected to a pulsed electric field in at least one treatment chamber (4), and **in that**, after the treatment of the vegetable tissues with a pulsed electric field, a first juice is extracted from the treatment chamber (4).

2. Method according to Claim 1, **characterized in that**, after the extraction of the first juice, the vegetable tissues are subjected to an additional juice extraction treatment, in particular by diffusion or pressing.

3. Method according to either of Claims 1 and 2, **characterized in that**, before the step of compacting the vegetable tissues, cutting of the vegetables is carried out.

4. Method according to Claim 3, **characterized in that** the cutting is carried out by means of a root-cutting tool.

5. Method according to any one of Claims 1 to 4, **characterized in that** it comprises a prior step of washing the vegetables, and **in that** compressed air is injected into the treatment chamber before the treatment of the compacted tissues with a pulsed electric field.

6. Method according to any one of Claims 1 to 5, **characterized in that** the step of treating the compacted vegetables is carried out by means of one or more treatment chambers arranged in series or in parallel.

7. Method according to any one of Claims 1 to 6, **characterized in that** the parameters of the pulsed electric field are regulated as a function of the nature of the vegetables to be treated.

8. Apparatus for treating vegetable tissues with a pulsed electric field in order to extract therefrom a vegetable substance, in particular a juice, **characterized in that** it comprises a stage (3) of compacting the vegetable tissues and at least one treatment chamber (4) comprising means (5) for generating a pulsed electric field in said chamber in order to treat the compacted tissues.

9. Apparatus according to Claim 8, **characterized in that** it comprises means (6) for extracting a first juice coming from the treatment chamber (4).

10. Apparatus according to either of Claims 8 and 9, **characterized in that** it comprises at least one additional stage (7, 8, 9) of treatment of the vegetable tissues, in particular by diffusion or by pressing, which is arranged at the exit of the treatment chamber (4).

11. Apparatus according to any one of Claims 8 to 10, **characterized in that** it comprises a stage (1) of cutting the vegetables, which is arranged upstream of the compacting stage (3).

12. Apparatus according to Claim 11, **characterized in that** the cutting stage (1) comprises a root cutter.

13. Apparatus according to any one of Claims 8 to 12, **characterized in that** the means for generating a pulsed electric field comprise a pulsed electric field generator delivering an electric field of between about 0.1 and 1 kV/cm.
